Europäisches Patentamt

European Patent Office

Office européen des brevets

(11) Veröffentlichungsnummer: **0 198 300 B1**

(12) **EUROPÄISCHE PATENTSCHRIFT**

(45) Veröffentlichungstag der Patentschrift: 05.06.91     (51) Int. Cl.⁵· **F16K 1/34**

(21) Anmeldenummer: 86104320.6

(22) Anmeldetag: 27.03.86

(54) Absperrventil mit weichdichtendem Ventilkegel.

(30) Priorität: **13.04.85 DE 3513297**

(43) Veröffentlichungstag der Anmeldung:
**22.10.86 Patentblatt 86/43**

(45) Bekanntmachung des Hinweises auf die
Patenterteilung:
**05.06.91 Patentblatt 91/23**

(84) Benannte Vertragsstaaten:
**AT BE CH DE FR GB IT LI LU NL SE**

(56) Entgegenhaltungen:
**AT-B- 220 902**     **DE-A- 2 508 272**
**DE-A- 2 815 629**     **DE-B- 1 209 831**
**DE-C- 1 267 046**     **DE-C- 2 938 315**
**FR-A- 734 651**     **US-A- 2 457 492**

(73) Patentinhaber: **KSB Aktiengesellschaft
Johann-Klein-Strasse 9
W-6710 Frankenthal(DE)**

(72) Erfinder: **Ruckert, Heinz-Jürgen
Friedensstrasse 21
W-6711 Grossniedesheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 198 300 B1

## Beschreibung

Die Erfindung betrifft ein Absperrventil mit einem durch eine Ventilspindel bewegbaren weichdichtenden Ventilkegel, welcher in Axialrichtung ober- und unterhalb seines weichdichtenden Teiles metallische Abstützungen besitzt, die beim Schließen des Absperrventils in einem konischen Ventilsitz zur Anlage kommen, wobei ein auf dem weichdichtenden Teil aufliegendes nach unten konkaves Federelement bei einer weiter in Verschlußrichtung erfolgenden Bewegung unmittelbar durch die Ventilspindel im Sinne einer Verflachung verformt wird und aufgrund dieser Verformung eine Pressung des weichdichtenden Teiles gegen den Ventilsitz bewirkt.

Absperrventile mit einem durch eine Ventilspindel bewegbaren Ventilkegel, der aus einem weichdichtenden Teil sowie ober- und unterhalb davon angeordneten metallischen Abstützungen besteht, sind in einer Reihe verschiedener Ausführungen bekannt. Gegenüber den mit einem durchgehend metallischen Ventilkegel ausgestatteten Absperrventilen besitzen sie den Vorteil, daß im Abdichtbereich vorhandener Schmutz in den weichdichtenden Teil eingebettet wird, also nicht zur Verhinderung einer dichten Absperrung führt. Die u. a. aus der DE-C- 12 67 046 und der DE-A- 25 08 272 bekannten Absperrventile können allerdings aufgrund des Elastomermaterials ihrer Weichdichtungen nur bis zu Medientemperaturen von ca. 120° eingesetzt werden.

Eine wesentliche Gemeinsamkeit der bekannten Absperrventile mit weichdichtendem Ventilkegel liegt in ihrer grundsätzlichen Wirkungsweise: Nach dem Aufsetzen der unterhalb des weichdichtenden Teiles gelegenen Abstützung wird die Weichdichtung durch ein oberhalb gelegenes, mittelbar oder unmittelbar durch die weiter nach unten bewegte Spindel beaufschlagtes Metallteil durch axiale Pressung nach außen, also gegen den Ventilsitz zur dichtenden Anlage verformt.

Es wäre hierbei wünschenswert, wenn die Weichdichtung während des gesamten Verformungsvorganges vollständig gekammert wäre, d. h. keine freie, unbeaufschlagte Oberflächenpartie besäße, welche durch die Pressung an den beaufschlagenden Metallteilen vorbeigequetscht würde. Abgesehen von der Möglichkeit partieller Zerstörungen oder Ablösungen des Weichdichtungsmaterials, ist es vor allem von Nachteil, daß der herausgequetschte Dichtungsanteil nicht mehr als elastisches Einbettmaterial zur Verfügung steht. Die natürliche Nachspannmöglichkeit im Elastomer, die z. B. bei kleinen Verformungen infolge Temperaturschwankungen benötigt wird, ist herabgesetzt. Im übrigen ist zu berücksichtigen, daß jedes der gebräuchlichen Elastomere einen plastischen Verformungsanteil besitzt, daß sich also die bisher üblichen Weichdichtungen nach einer Verformung nicht vollständig in ihre ursprüngliche Form zurückbilden. Es bleibt der sog. Druckverformungsrest übrig. Dies kann nur teilweise dadurch kompensiert werden, daß das Elastomervolumen möglichst groß gewählt wird, um den Restverformungsanteil zu minimieren.

Bedingt durch die Art des Zusammenwirkens zwischen einem konischen Ventilsitz und einem Ventilkegel, dessen metallischer Oberteil sich während des Verformungsvorganges tiefer in den Ventilsitz hineinbewegt, ist die erwünschte vollständige Kammerung des weichdichtenden Teiles während des Verformungsvorganges bei den geschilderten Absperrventilen nicht möglich. Die Wirkungsweise dieser Absperrventile setzt voraus, daß der Durchmesser des metallischen Oberteiles kleiner ist als der Konussitz an der Stelle, an der der Oberteil zum Stillstand gelangt.

Es ist auch schon ein Absperrventil mit einem konischen Dichtelement bekannt, dessen gummielastische Dichtung während des Anpreßvorganges im Ventilsitz zwischen einem unteren Führungsteil und einer die Dichtung von oben beaufschlagenden Federscheibe gekammert ist (DE-C- 29 38 315). Die kreisringförmige, nach unten konkave Federscheibe wird nach dem Aufsetzen ihres Außenrandes im Ventilsitz durch ein am Ende der Ventilspindel befindliches Druckstück gegen die Dichtung gepreßt und dabei abgeflacht. Die mit diesem Vorgang verbundene Vergrößerung des Außendurchmessers der Federscheibe verursacht eine starke Pressung der aufliegenden Kante gegen den Ventilsitz. Es ist daher mit einer hohen Beanspruchung und einem entsprechenden Verschleiß in diesem Bereich zu rechnen. Dies kann schließlich zu einer Beeinträchtigung der Dichtwirkung führen, weil die einwandfreie Anpressung der Dichtung nur bei gleichzeitigem Aufsetzen von Führungsteil und Federscheibe gewährleistet ist. Da im übrigen die Dichtung dieses Systems von einer der Befestigung des Führungsteiles dienenden Einrichtung durchbrochen ist, die sich relativ zu der Dichtung bewegt, kann wegen der am Innendurchmesser der Dichtung erfolgenden Walk- und Reibarbeit das Auftreten eines Leckstromes nicht auf Dauer ausgeschlossen werden.

Schließlich ist noch ein Absperrventil bekannt (DE-B- 12 09 831), bei dem eine die Öffnung eines ebenen Ventilsitzes vollständig überdeckende starre Platte die Abstützung des geschlossenen Ventilkegels übernimmt. Der die starre Platte auf größerem Durchmesser umgebende weichdichtende Teil wird umschlossen von einem druckfesten Mantel, der beweglich auf einem Absatz der Ventilspindel angeordnet ist. Oberhalb des weichdichtenden Teils ist eine zunächst ebene, federelastische Platte vorgesehen, welche von dem im Schließzustand verformten weichdichtenden Material in einen Hohlraum hinein gewölbt wird. Die hieraus entstehende Vorspannung soll den weichdichtenden Teil bei einer Verkleinerung des Volumens durch Temperaturänderungen in Richtung des Ventilsitzes drükken.

Die vorstehend zitierte Literaturstelle bezieht sich in ihrer Darstellung allein auf Absperrventile mit ebenem Ventilsitz. Eine Übertragung ihrer Lehre auf ein Absperrventil mit konischem Ventilsitz erscheint zwar möglich; der Wirkmechanismus ist aber anders als bei den Absperrventilen der gattungsgemäßen Art. Vor allem besteht hier eine andere Wechselwirkung zwischen dem starren, dem weichdichtenden und dem federelastischen Teil. Die bei Absperrventilen der eingangs genannten Art gegebene aktive Teilnahme des federelastischen Teils bei der Verformung und Anpressung des weichdichtenden Teils bei sich schließenden Ventilkegel ist hier nicht vorhanden.

Der Erfindung liegt die Aufgabe zugrunde, ein Absperrventil der eingangs genannten Art zu schaffen, das bei geringem Verschleiß des weichdichtenden Teiles und des Ventilsitzes einen stets völlig dichten Abschluß gewährleistet.

Die gestellte Aufgabe wird erfindungsgemäß dadurch gelöst, daß oberhalb des weichdichtenden Teiles eine auf dem weichdichtenden Teil aufliegende, von der Abstützung unabhängige federelastische Platte angeordnet ist, welche durch die Stirnfläche der nach dem Anliegen der Abstützungen weiterbewegten Ventilspindel zu verformen ist, daß die unterhalb des weichdichtenden Teiles gelegene Abstützung von einer die Stirnfläche des weichdichtenden Teiles überdeckenden starren Platte gebildet wird und daß sich das weichdichtende Teil zwischen der federelastischen Platte und der unteren starren Platte radial durchgehend erstreckt.

Die Unteransprüche nennen vorteilhafte Ausgestaltungen des Erfindungsgegenstandes.

Beim erfindungsgemäßen Absperrventil ist der weichdichtende Teil während des Verformungsvorganges vollständig gekammert. Er bildet eine ununterbrochene, die gesamte Öffnung des Ventilsitzes ausfüllende Dichtung. Da der weichdichtende Teil außerdem eine elastische Verbindung zwischen der unteren und der oberen Abstützung herstellt, erfolgt eine gegenseitige Anpassung in der Anlage der beiden Abstützungen im Ventilsitz, bevor die Pressung des weichdichtenden Teiles gegen den Ventilsitz beginnt.

Aufgrund der besonderen Art der Verformung beim erfindungsgemäßen Absperrventil ist die Forderung nach elastischem Verhalten der Weichdichtung wesentlich abgeschwächt. Hierdurch eröffnet sich vor allem die Möglichkeit, auch solche Materialien für den weichdichtenden Teil einzusetzen, die nicht die Elastizität der Elastomere haben, dafür aber eine wesentlich höhere Beständigkeit, beispielsweise gegen Medientemperaturen über 120 °C, besitzen. Hier ist vor allem an PTFE zu denken, das bisher wegen seiner geringen Elastizität und seines Kriechverhaltens bei weichdichtenden Absperrventilen der eingangs genannten Art nicht einsetzbar war.

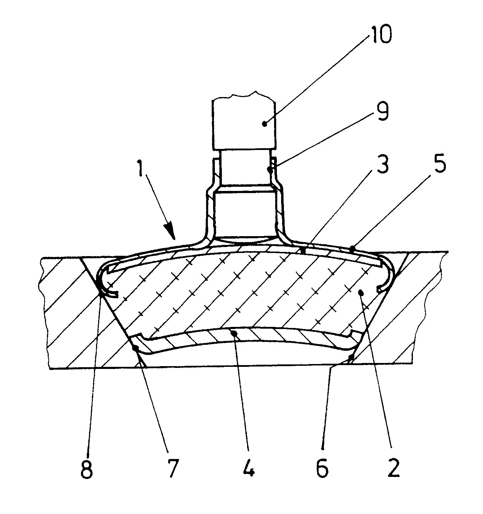

Anhand eines Ausführungsbeispiels wird die Erfindung näher erläutert. Die Zeichnung zeigt einen Ausschnitt aus einem erfindungsgemäßen Absperrventil im Bereich des Ventilsitzes.

Der Ventilkegel 1 besteht aus einem weichdichtenden Teil 2, einer oberhalb des weichdichtenden Teils 2 angeordneten, durch Vulkanisation mit diesem verbundenen federelastischen Platte 3, einer die untere Stirnfläche des weichdichtenden Teils 2 überdeckenden, nach oben gewölbten starren Platte 4 und einer oberhalb der federelastischen Platte 3 angeordneten starren Platte 5. Die aus Blech bestehenden Platten 4 und 5 sind mit dem weichdichtenden Teil 2 verklammert, ihre im Ventilsitz zur Anlage kommenden Ränder bilden die Abstützungen 7 und 8 des Ventilkegels 1.

Die obere Blechplatte 5 besitzt einen rohrförmigen Ansatz 9, über den die Befestigung des Ventilkegels 1 mit einer Ventilspindel 10 in der Weise hergestellt wird, daß der obere Teil des rohrförmigen Ansatzes 9 nach einem Walzvorgang eine an der Ventilspindel 10 durch Eindrehen entstandene Schulter hintergreift. Auf diese Weise liegt die Ventilspindel 10 mit einer balligen Stirnfläche unmittelbar auf der federelastischen Platte 3 auf.

Beim Schließen des Ventils setzen zunächst die an den Blechplatten 4 und 5 vorhandenen Abstützungen 7 und 8 im Ventilsitz 6 auf. Hierdurch ergibt sich eine Vordrosselung der Durchgangsströmung. Bei weiterer Anwärtsbewegung der Ventilspindel 10 wird die federelastische Platte 3 nach unten gedrückt. Bei dieser Bewegung weicht der weichdichtende Teil nach außen aus, wird also zunehmend gegen den Ventilsitz 6 gepreßt. Es ergibt sich eine rundum fest anliegende Abdichtung.

Beim Öffnen des Ventils bewegt sich die federelastische Platte 3 aufgrund ihrer Eigenspannung in ihre Ursprungsform zurück und die Anpressung des weichdichtenden Teils 2 an den Ventilsitz 6 wird aufgehoben. Liegt nun die Schulter der Ventilspindel 10 im rohrförmigen Ansatz 9 an, so wird der Ventilkegel 1 ohne eine Reibung des weichdichtenden Teiles 2 vom Ventilsitz 6 abgehoben.

## Ansprüche

1.  Absperrventil mit einem durch eine Ventilspindel (10) bewegbaren weichdichtenden Ventilkegel (1), welcher-in Axialrichtung ober- und unterhalb seines weichdichtenden Teiles (2) metallische Abstützungen (7, 8) besitzt, die beim Schließen des Absperrventils in einem konischen Ventilsitz (6) zur Anlage kommen, wobei ein auf dem weichdichtenden Teil (2) aufliegendes nach unten konkaves Federelement (3) bei einer weiter in Verschlußrichtung erfolgenden Bewegung unmittelbar durch die Ventilspindel (10) im Sinne einer Verflachung verformt wird und aufgrund dieser Verformung eine Pressung des weichdichtenden Teiles (2) gegen den Ventilsitz (6) bewirkt, **dadurch gekennzeichnet,** daß oberhalb des weichdichtenden Teiles (2) eine auf dem weichdichtenden Teil (2) aufliegende, von der Abstützung (8) unabhängige federelastische Platte (3) angeordnet ist, welche durch die Stirnfläche der nach dem Anliegen der Abstützungen (7, 8) weiterbewegten Ventilspindel (10) zu verformen ist, daß die unterhalb des weichdichtenden Teiles (2) gelegene Abstützung (7) von einer die Stirnfläche des weichdichtenden Teiles (2) überdeckenden starren Platte (4) gebildet wird und daß sich das weichdichtende Teil (2) zwischen der federelastischen Platte (3) und der unteren starren Platte (4) radial durchgehend erstreckt.

**2.** Absperrventil nach Anspruch 1, dadurch gekennzeichnet, daß der weichdichtende Teil (2) durch ein Elastomer gebildet wird.

**3.** Absperrventil nach Anspruch 1, dadurch gekennzeichnet, daß der weichdichtende Teil (2) durch PTFE gebildet wird.

**4.** Absperrventil nach Anspruch 1 und einem der folgenden Ansprüche, dadurch gekennzeichnet, daß die obere und die untere Abstützung (7, 8) des Ventilkegels (1) von Blechplatten (4, 5) gebildet werden, die mit dem weichdichtenden Teil (2) verklammert oder durch Vulkanisation verbunden sind.

## Claims

**1.** A shut off valve comprising a softly sealing valve cone (1) adapted to be moved by a valve stem (10) and which above and below its softly sealing part (2) in the axial direction possesses metallic supports (7 and 8), which on closure of the shut off valve come into engagement with a conical valve seat (6), a downwardly concave spring element (3), which rests on the softly sealing part (2), being deformed directly when there is a further motion in the closing direction, by the valve stem (10) so as to cause flattening and owing to such deformation causes a pressing of the softly sealing part (2) against the valve seat (6), characterized in that above the softly sealing part (2) a resiliently elastic plate (3) is arranged which rests on the softly sealing part (2) and is independent from the support (8), and this plate (3) is to be deformed by the end face of the valve stem (10) which is moved on farther by the end face after the engagement of the supports (7 and 8), in that the support (7) arranged under the softly sealing part (2) is formed by a rigid plate (4) covering the end face of the softly sealing part (2) and in that the softly sealing part (2) extends between the resiliently elastic plate (3) and the lower rigid plate (4) radially and continuously.

**2.** The shut off valve as claimed in claim 1, characterized in that the softly sealing part (2) is formed by an elastomer.

**3.** The shut off valve as claimed in claim 1, characterized in that the softly sealing part (2) is constituted by PTFE.

**4.** The shut off valve as claimed in claim 1 and any one of the following claims, characterized in that the upper and the lower support (7 and 8) of the valve cone (1) are constituted by sheet metal parts (4 and 5), which are clampingly attached to the softly sealing part (2) or are connected by vulcanization.

## Revendications

**1.** Soupape d'arrêt avec un cône de soupape (1) muni d'une garniture molle et mobile grâce à une tige de soupape (10), cône qui possède, dans le sens axial au-dessus et au-dessous de ses pièces (2) à garniture molle, des supports (7, 8) métalliques, qui, lors de la fermeture de la soupape d'arrêt, se placent dans un siège de soupape conique (6), pendant qu'un élément de ressort (3) concave vers le bas et reposant sur la pièce (2) de garniture molle est déformé par la tige de soupape (10) dans le sens d'un applatissement si le mouvement continue dans le sens de la fermeture et qu'il provoque, due à cette déformation, une compression de la pièce à garniture molle (2) contre le siège (6) de la soupape, caractérisée en ce qu'est placée, au-dessus de la pièce à garniture molle (2), une plaque (3) élastique comme un ressort, reposant sur la pièce à garniture molle (2) et indépendante du support (8), plaque qui doit être formée par la face frontale de la tige de soupape (10) qui continue son mouvement après l'adhérence des supports (7, 8), en ce que le support (7) situé au-dessous de la pièce à garniture molle (2) est formé par une plaque (4) raide recouvrant la face frontale de la pièce à garniture molle (2) et en ce que la pièce à garniture molle (2) s'étend radialement sans interruption entre la plaque (3) élastique comme un ressort et la plaque (4) raide inférieure.

2. Soupape d'arrêt selon la revendication 1 caractérisée en ce que la pièce à garniture molle (2) est formée d'un élastomère.

3. Soupape d'arrêt selon la revendication 1 caractérisée en ce que la pièce à garniture molle (2) est formée en PTFE.

4. Soupape d'arrêt selon la revendication 1 et une des caractéristiques suivantes caractérisée en ce que le support supérieur et le support inférieur (7, 8) du cône de la soupape (1) sont formés de plaques de tôle (4, 5) qui sont agrafées à la pièce à garniture molle (2) ou liées par vulcanisation.